# EUROPEAN PATENT SPECIFICATION

(11) **EP 3 474 601 B1**
(45) Date of publication and mention of the grant of the patent: **25.10.2023**
(21) Application number: 18200933.2
(22) Date of filing: 17.10.2018
(51) Int. Cl.: H04W 48/18, H04W 76/11

(54) **DEVICE AND METHOD OF HANDLING A PROTOCOL DATA UNIT SESSION AND A NETWORK SLICE**
VORRICHTUNG UND VERFAHREN ZUR HANDHABUNG EINER PROTOKOLLDATENEINHEITSSITZUNG UND NETZWERKSCHICHT
DISPOSITIF ET PROCÉDÉ DE GESTION D'UNE SESSION D'UNITÉ DE DONNÉES DE PROTOCOLE ET D'UNE TRANCHE DE RÉSEAU

(30) Priority: 17.10.2017 US 201762573172 P; 17.10.2017 US 201762573676 P
(43) Date of publication of application: 24.04.2019
(60) Divisional application: 19217670.9
(73) Proprietor: HTC Corporation, Taoyuan City 330, (TW)
(72) Inventor: TIWARI, Kundan, 330 Taoyuan City (TW); WU, Chih-Hsiang, 330 Taoyuan City (TW)
(74) Representative: Carstens, Dirk Wilhelm

(56) References cited:
- EP-A2- 3 416 430
- CA-A1- 3 019 903
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 20 April 2017 (2017-04-20), pages 1-116, XP051298172, [retrieved on 2017-04-20]

## Description

### Background of the Invention

### 1. Field of the Invention

The present invention relates to a device and a method used in a wireless communication system, and more particularly, to a device and a method of handling a protocol data unit session and a network slice.

### 2. Description of the Prior Art

A new radio (NR) system, initiated by the third generation partnership project (3GPP), includes a new radio interface and a new radio network architecture that provides a high data rate, a low latency, packet optimization, and an improved system capacity and an improved coverage.

EP 3 416 430 A2 discloses a communication device for handling mobility from a long-term evolution (LTE) network to a fifth generation (5G) network comprising a storage device storing instructions of transmitting a first LTE Non-Access Stratum (NAS) message to the LTE network; receiving a second LTE NAS message in response to the first LTE NAS message, from the LTE network; and transmitting a message to the 5G network, after determining to communicate with the 5G network instead of the LTE network, wherein the message comprises a slice information, and the slice information is comprised in the first LTE NAS message or in the second LTE NAS message.

CA 3019903 A1 discloses a communication procedure for transmitting and receiving data, suitable for network slicing and DeCOR. A communications provider has one or a plurality of network slices within a core network that it manages, and the network slice comprises one or a plurality of network functions therewithin. On the basis of a request from a terminal device or registration information of the terminal device, the terminal device executes a process to connect to one or a plurality of network slices corresponding to a service or application. Further, the terminal device executes a process to connect to an additional network slice on the basis of authentication results from the network.

### Summary of the Invention

The present invention therefore provides a method and related communication device for handling a protocol data unit session and a network slice to solve the abovementioned problem. The invention is defined by the independent claims. The dependent claims define advantageous embodiments.

A communication device for handling a packet data network (PDN) connection and a network slice comprises at least one storage device; and at least one processing circuit, coupled to the at least one storage device. The at least one storage device stores, and the at least one processing circuit is configured to execute instructions of establishing a PDN connection with a first network; transmitting a Registration Request message of a Registration procedure to a second network, wherein the Registration Request message comprises a protocol data unit (PDU) Session Identifier (ID) identifying the PDN connection; and receiving a Registration Accept message comprising a slice identifier associated to the PDN connection, from the second network.
These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.

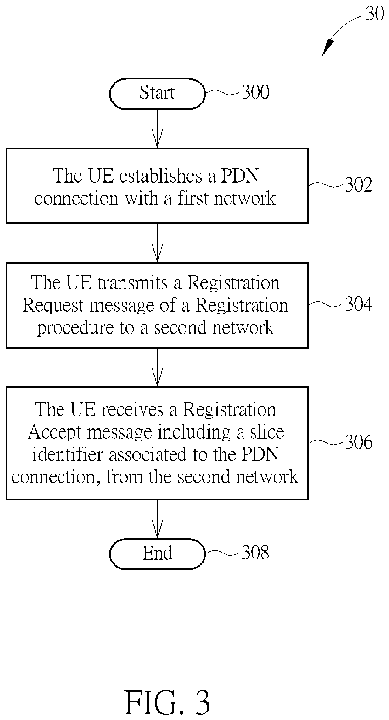

Fig. 3 is a flowchart of a process according to an example of the present invention.

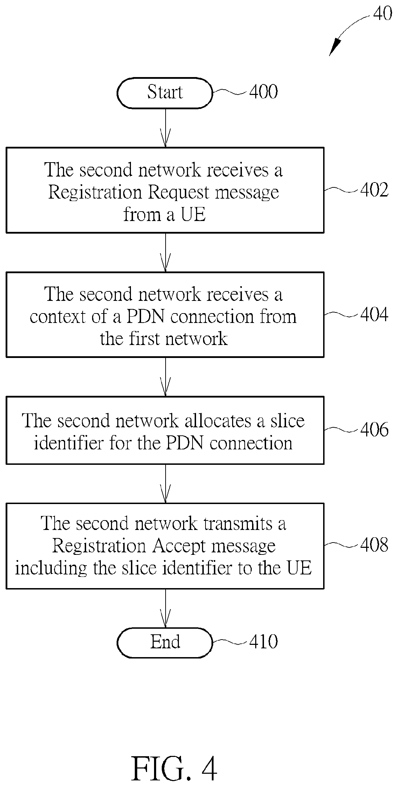

Fig. 4 is a flowchart of a process according to an example of the present invention.

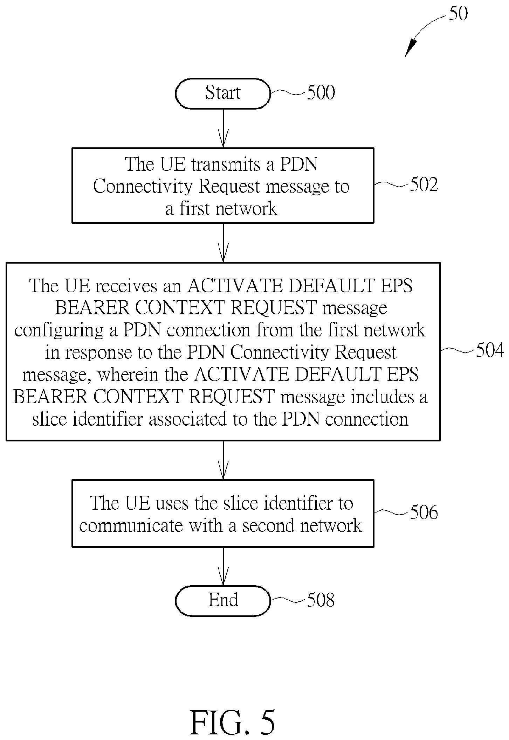

Fig. 5 is a flowchart of a process according to an example of the present invention.

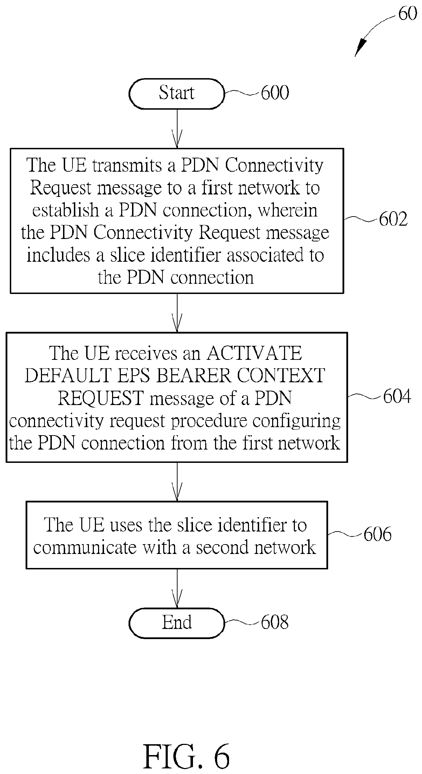

Fig. 6 is a flowchart of a process according to an example of the present invention.

### Detailed Description

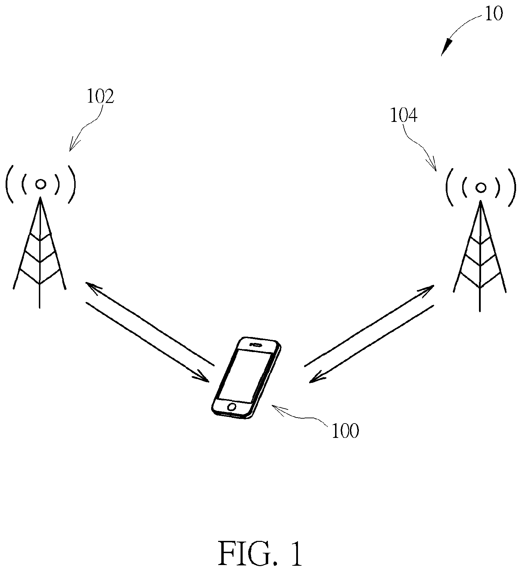

Fig. 1 is a schematic diagram of a wireless communication system 10 according to an example of the present invention. The wireless communication system 10 is briefly composed of a communication device 100, a network 102 and a network 104. In Fig. 1, the communication device 100, the network 102 and the network 104 are simply utilized for illustrating the structure of the wireless communication system 10. Any of the networks 102 and 104 may include a base station (BS). The BS may be an evolved Node-B (eNB), a next generation Node-B (gNB), an enhanced long-term evolution (eLTE) BS, etc.

The communication device 100 is configured to simultaneously connect to the networks 102 and 104 (e.g., dual connectivity (DC)). That is, the communication device 100 in the DC performs a transmission/reception via both the networks 102 and 104. For example, the communication device 100 receives packets from the network 102 at a first carrier frequency and the network104 at a second carrier frequency, or the communication device 100 transmits packets to the network 102 at a first carrier frequency and the network 104 at a second carrier frequency. The first carrier frequency and the second carrier frequency may or may not be overlapped.

The communication device 100 may be a user equipment (UE), a mobile phone, a laptop, a tablet computer, an electronic book, a portable computer system, a vehicle or an airplane. In addition, for an uplink (UL), the communication device 100 is a transmitter and the network(s) 102 and/or 104 is a receiver(s), and for a downlink (DL), the network(s) 102 and/or 104 is a transmitter(s) and the communication device 100 is a receiver.

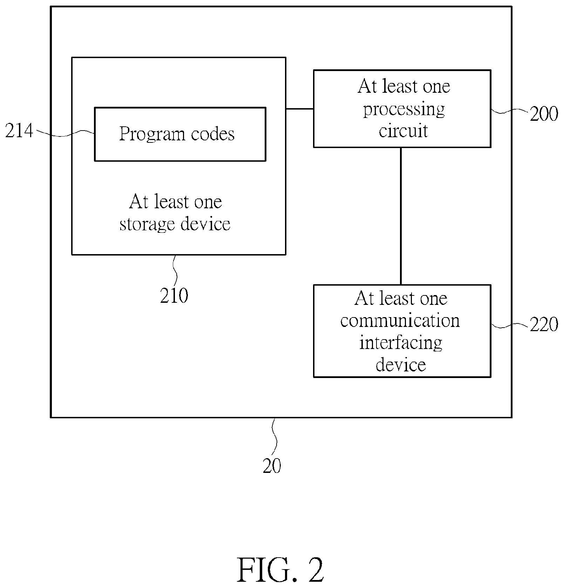

Fig. 2 is a schematic diagram of a communication device 20 according to an example of the present invention. The communication device 20 may be the communication device 100, the network (s) 102 and/or 104 shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

In the following examples, a UE is used for representing the communication device 100 in Fig. 1, to simplify the illustration of the examples.

According to the prior art, when an application of a UE initiates a data transfer, a Network Slice Selection Policy (NSSP) rule maps the application to a network slice and a UE initiates a protocol data unit (PDU) session establishment corresponding to the network slice. The UE associates a PDU session to the network slice, after the PDU session is established. However, after an intersystem change from an evolved packet core (EPC) to a 5G core network (5GC), it is unknown to which network slice the PDU session (or the PDN connection) is mapped.

A process 30 is utilized in a UE, to determine a network slice to which an established PDU session of the UE is associated. The process 30 includes the following steps:

| | |
|---|---|
| Step 300: | Start. |
| Step 302: | The UE establishes a PDN connection with a first network (e.g., EPC). |
| Step 304: | The UE transmits a Registration Request message of a Registration procedure to a second network (e.g., 5GC) . |
| Step 306: | The UE receives a Registration Accept message including a slice identifier associated to the PDN connection, from the second network. |
| Step 308: | End. |

In one example, the UE performs a PDN connectivity procedure with the first network to establish the PDN connection (e.g., as specified in 3GPP TS 24.301). The UE may include a PDU Session Identifier (ID) for identifying the PDN connection or for associating the PDU Session ID to the PDN connection in a PDN CONNECTIVITY REQUEST message of the PDN connectivity procedure transmitted to the first network.

In one example, the UE performs a PDN connectivity procedure with the first network to establish the PDN connection (e.g., as specified in 3GPP TS 24.301) . The first network may include a PDU Session ID for identifying the PDN connection in an ACTIVATE DEFAULT EPS BEARER CONTEXT REQUEST message of the PDN connectivity procedure transmitted to the UE.

In one example, a PDU Session ID may be used for identifying the PDN connection. The Registration Request message may or may not include the PDU Session ID identifying the PDN connection.

In one example, the first network transmits a context of the PDN connection to the second network in response to a message transmitted by the second network due to the Registration procedure . The first network may or may not transmit the PDU Session ID to the second network in the context. In one example, the second network determines to keep the PDN connection or to release the PDN connection, and notify the determination in the Registration Accept message to the UE. In one example, the Registration Accept message may include the PDU Session ID for identifying the PDN connection, if the second network determines to keep the PDN connection for the UE.

In one example, when the UE moves from a first cell belonging to the first network to a second cell belonging to the second network, the UE transmits the Registration Request message to the second network via the second cell. The second network may configure a network slice associated to the PDN connection. To do so, the second network may allocate a slice identifier (e.g., Single - Network Slice Selection Assistance Information (S-NSSAI)) associated to the PDN connection. The second network may transmit a Registration Accept message indicating the slice identifier associated to the PDN connection.

The Registration Accept message may include the PDU Session ID.

In one example, the Registration Accept message neither includes the PDU Session ID nor includes the slice identifier. In this case, the UE may perform a PDU Session Establishment procedure with the second network by transmitting a PDU Session Establishment Request message to the second network via the second cell. The UE may receive a PDU Session Establishment Accept message responding to the PDU Session Establishment Request message, from the second network via the second cell.

A process 40 is utilized in the second network in the process 30, to assign a network slice associated to a PDN connection of a UE. The process 40 includes the following steps:

| | |
|---|---|
| Step 400: | Start. |
| Step 402: | The second network receives a Registration Request message from a UE. |
| Step 404: | The second network receives a context of a PDN connection from the first network. |
| Step 406: | The second network allocates a slice identifier for the PDN connection. |
| Step 408: | The second network transmits a Registration Accept message including the slice identifier to the UE. |
| Step 410: | End. |

Description for the process 30 may be applied to the process 40, and is not repeated herein. The following examples may be applied to the above processes.

In one example, the second network transmits a UE Configuration Update Command message allocating the slice identifier to the UE, if (e.g., when) the second network does not include the slice identifier in the Registration Accept message.

In one example, to indicate the slice identifier associated to the PDU Session ID associated to the PDN connection, the Registration Accept message or the UE Configuration Update Command message may include an IE including a set of PDU Session ID and the slice identifier as follows:
Set 1 {PDU Session ID X, S-NSSAI Y}, X is an integer (e.g., 1, 2, ...) and Y is an integer (e.g., 1, 2, ...), wherein the S-NSSAI Y may be defined as follows:
S-NSSAI 1 = eMBB (enhanced Mobile Broadband)
S-NSSAI 2 = MIoT (massive IoT)
S-NSSAI 3 = URLLC (ultra- reliable low latency communications)

A process 50 is utilized in a UE, to determine a network slice to which an established PDU session of the UE is associated. The process 50 includes the following steps:

| | |
|---|---|
| Step 500: | Start. |
| Step 502: | The UE transmits a PDN Connectivity Request message to a first network (e.g., EPC). |
| Step 504: | The UE receives an ACTIVATE DEFAULT evolved packet system (EPS) BEARER CONTEXT REQUEST message configuring a PDN connection from the first network in response to the PDN Connectivity Request message, wherein the ACTIVATE DEFAULT EPS BEARER CONTEXT REQUEST message includes a slice identifier associated to the PDN connection. |
| Step 506: | The UE uses (e.g., applies) the slice identifier to communicate with a second network (e.g., 5GC). |
| Step 508: | End. |

According to the process 50, the UE associates the PDN connection to the slice identifier. That is, the first network can configure the UE to associate the PDN connection to a slice identified by the slice identifier.

In one example, the UE transmits an ACTIVATE DEFAULT EPS BEARER CONTEXT ACCEPT message to the first network in response to the ACTIVATE DEFAULT EPS BEARER CONTEXT REQUEST message. When the UE moves to the second network from the first network, the UE may transmit a radio resource control (RRC) message to a BS of the second network or a non-access stratum (NAS) message to the second network via the BS. To use the slice identifier configured by the first network, the UE may include the slice identifier in the RRC message or the NAS message. In one example, the RRC message is a RRC request message or a RRC complete message of a RRC connection establishment procedure, a RRC connection resume procedure or a RRC connection reestablishment procedure. In one example, the NAS message is a NAS request message or a NAS complete message of a NAS Registration procedure, or is a NAS request message or a NAS complete message of a NAS Service Request procedure. In one example, the NAS message is a PDU Session Modification Request message or a PDU Session Release Request message.

In one example, the first network (e.g., mobility management entity (MME) of the EPC) determines the slice identifier according to at least one parameter of the PDN connection in the first network. The at least one parameter may include at least one of an Access Point Name (APN) and a PDN type. For example, the first network may include a first slice identifier in the ACTIVATE DEFAULT EPS BEARER CONTEXT REQUEST message, when a first APN and/or a first PDN type is used for the PDN connection. The first network may include a second slice identifier in the ACTIVATE DEFAULT EPS BEARER CONTEXT REQUEST message, when a second APN and/or a second PDN type is used for the PDN connection.

A process 60 is utilized in a UE, to determine a network slice to which an established PDU session of the UE is associated. The process 60 includes the following steps:

| | |
|---|---|
| Step 600: | Start. |
| Step 602: | The UE transmits a PDN Connectivity Request message to a first network (e.g., EPC) to establish a PDN |
| | connection, wherein the PDN Connectivity Request message includes a slice identifier associated to the PDN connection. |
| Step 604: | The UE receives an ACTIVATE DEFAULT EPS BEARER CONTEXT REQUEST message of a PDN connectivity request procedure configuring the PDN connection from the first network. |
| Step 606: | The UE uses (e.g., applies) the slice identifier to communicate with a second network (e.g., 5GC). |
| Step 608: | End. |

In one example, the UE determines to activate the PDN connection in a slice identified by the slice identifier, and performs Step 602 in response to the determination. The UE may have the slice identifier in a storage device of the UE, or may receive the slice identifier from the first network or the second network before Step 602.

In one example, the UE transmits an ACTIVATE DEFAULT EPS BEARER CONTEXT ACCEPT message to the first network in response to the ACTIVATE DEFAULT EPS BEARER CONTEXT REQUEST message. When the UE moves from the second network from the first network, the UE may transmit a RRC message to a BS of the second network or a NAS message to the second network via the BS. The UE may include the slice identifier in the RRC message or the NAS message. Examples of the RRC message and the NAS message can be referred to the previous description, and are not narrated herein.

In one example, the UE determines the slice identifier according to at least one parameter of the PDN connection in the first network. The at least one parameter may include at least one of an APN and a PDN type. For example, the UE may include a first slice identifier in the PDN CONNECTIVITY REQUEST message, when a first APN and/or a first PDN type is used for the PDN connection. The UE may include a second slice identifier in the PDN CONNECTIVITY REQUEST message, when a second APN and/or a second PDN type are used for the PDN connection.

Examples of the processes 30 and 40 may be applied to the processes 50 and 60, and are not repeated herein.

In the above processes, the UE may convert, map or transfer the PDN connection to a PDU Session. In this case, the PDN connection may represent the PDU session converted/mapped/transferred from the PDN connection.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. In the above description, description for the first network may be compiled into the program codes 214 in a first BS, and description for the second network may be compiled into the program codes 214 in a second BS.

To sum up, the present invention provides a method and related communication device for efficiently handling a PDU session and a network slice. Thus, the problem that a communication device does not have a network slice for a PDU session when connecting to another network is solved.
Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (100) for handling a packet data network, PDN, connection and a network slice, comprising:
at least one storage device (210); and
at least one processing circuit (200), coupled to the at least one storage device (210), wherein the at least one storage device (210) stores, and the at least one processing circuit (200) is configured to execute instructions of:
establishing (302) a PDN connection with an evolved packet core, EPC, network (102);
transmitting (304; 402) a Registration Request message of a Registration procedure to a fifth-generation core, 5GC,network (104);
receiving (306; 408), from the 5GCnetwork (104),a Registration Accept message comprising a slice identifier;
simultaneously connecting to the EPC and the 5GC networks (102, 104); and
receiving packets from the EPC network (102) at a first carrier frequency and the 5GCnetwork (104) at a second carrier frequency, or transmitting packets to the EPC network (102) at the first carrier frequency and the 5GCnetwork (104) at the second carrier frequency.

2. The communication device (100) of claim 1, wherein the at least one processing circuit (200) is further configured to execute instructions of:
performing a PDN connectivity procedure with the EPC network (102) to establish (302) the PDN connection with the EPC network (102);
wherein the communication device (100) comprises a PDU Session Identifier, ID, for identifying the PDN connection in a PDN CONNECTIVITY REQUEST message of the PDN connectivity procedure transmitted to the EPC network (102).

3. A method performed by a communication device (100) for handling a packet data network, PDN, connection and a network slice, comprising:
establishing (302) a PDN connection with an evolved packet core, EPC, network (102);
transmitting (304; 402) a Registration Request message of a Registration procedure to a fifth-generation core, 5GC,network (104);
receiving (306; 408),from the 5GC network (104), a Registration Accept message comprising a slice identifier;
simultaneously connecting to the first and the 5GCnetworks (102, 104); and
receiving packets from the EPC network (102) at a first carrier frequency and the 5GCnetwork (104) at a second carrier frequency, or transmitting packets to the EPC network (102) at the first carrier frequency and the 5GCnetwork (104) at the second carrier frequency.

4. The method according to claim 3, wherein the method further comprises:
performing a PDN connectivity procedure with the EPC network (102) to establish the PDN connection with the EPC network (102);
wherein the communication device (100) comprises a PDU Session Identifier, ID, for identifying the PDN connection in a PDN CONNECTIVITY REQUEST message of the PDN connectivity procedure transmitted to the EPC network (102).

5. A fifth-generation core, 5GC,network (104) for handling a packet data network, PDN, connection and a network slice, comprising:
at least one storage device (210); and
at least one processing circuit (200), coupled to the at least one storage device (210), wherein the at least one storage device (210) stores, and the at least one processing circuit (200) is configured to execute instructions of:
receiving a Registration Request message from a communication device (100);
receiving, from an evolved packet core, EPC, network (102), a context of a PDN connection of the communication device (100) with the EPC network (102);
allocating a slice identifier for the PDN connection;
transmitting, to the communication device (100), a Registration Accept message comprising the slice identifier;
connecting to the communication device (100); and
receiving packets from the communication device (100) at a second carrier frequency, or transmitting packets to the communication device (100) at the second carrier frequency.

6. The 5GCnetwork (104) of claim 5, wherein the instructions further comprise:
transmitting a UE Configuration Update Command message allocating the slice identifier to the communication device (100), when the 5GCnetwork (104) does not comprise the slice identifier in the Registration Accept message.

7. The 5GCnetwork (104) of claim 5, wherein the instructions further comprise:
determining to keep the PDN connection with the EPC network (102) or to release the PDN connection with the EPC network (102); and
notifying the determination in the Registration Accept message to the communication device (100).

8. The 5GCnetwork (104) of claim 5, wherein the Registration Accept message comprises a PDU Session Identifier, ID, for identifying the PDN connection with the EPC network (102), if the 5GCnetwork (104) determines to keep the PDN connection with the EPC network (102) for the communication device (100).

9. A method performed by a fifth-generation core, 5GC,network (104) device for handling a packet data network, PDN, connection and a network slice, comprising:
receiving a Registration Request message from a communication device (100);
receiving, from an evolved packet core, EPC, network (102), a context of a PDN connection of the communication device (100) with the EPC network (102);
allocating a slice identifier for the PDN connection;
transmitting, to the communication device (100), a Registration Accept message comprising the slice identifier;
connecting to the communication device (100); and
receiving packets from the communication device (100) at a second carrier frequency, or transmitting packets to the communication device (100) at the second carrier frequency.

10. The method of claim 9, wherein the method further comprises:
transmitting a UE Configuration Update Command message allocating the slice identifier to the communication device (100), when the 5GCnetwork (104) does not comprise the slice identifier in the Registration Accept message.

11. The method of claim 9, wherein the method further comprises:
determining to keep the PDN connection with the EPC network (102) or to release the PDN connection with the EPC network (102); and
notifying the determination in the Registration Accept message to the communication device (100).

12. The method of claim 9, wherein the Registration Accept message comprises a PDU Session Identifier, ID, for identifying the PDN connection with the EPC network (102), if the 5GCnetwork (104) determines to keep the PDN connection with the EPC network (102) for the communication device (100).

## Patentansprüche

1. Ein Kommunikationsgerät (100) für das Handhaben einer Paketdatennetz (PDN)-Verbindung und eines Netz-Slices, aufweisend:
wenigstens eine Speichereinrichtung (210), und
wenigstens eine Verarbeitungsschaltung (200), die mit der wenigstens einen Speichereinrichtung (210) gekoppelt ist, wobei die wenigstens eine Speichereinrichtung (210) Befehle speichert und die wenigstens eine Verarbeitungseinrichtung (200) konfiguriert ist zum Ausführen von diesen zum:
Herstellen (302) einer PDN-Verbindung mit einem EPC (Evolved Packet Core)-Netz (102),
Senden (304; 402) einer Registrierungsanfrage-Nachricht einer Registrierungsprozedur an ein 5GC (Fifth-Generation Core)-Netz (104),
Empfangen (306; 408), von dem 5GC-Netz (104), einer Registrierungsannahme-Nachricht, die einen Slice-Identifizierer aufweist,
gleichzeitiges Verbinden mit den EPC- und 5GC-Netzen (102, 104), und
Empfangen von Paketen von dem EPC-Netz (102) auf einer ersten Trägerfrequenz und von dem 5GC-Netz (104) auf einer zweiten Trägerfrequenz, oder Senden von Paketen an das EPC-Netz (102) auf der ersten Trägerfrequenz und an das 5GC-Netz (104) auf der zweiten Trägerfrequenz.

2. Kommunikationsgerät (100) nach Anspruch 1, wobei die wenigstens eine Verarbeitungsschaltung (200) weiterhin konfiguriert ist zum Ausführen von Befehlen zum:
Durchführen einer PDN-Konnektivitätsprozedur mit dem EPC-Netz (102) für das Herstellen (302) der PDN-Verbindung mit dem EPC-Netz (102),
wobei das Kommunikationsgerät (100) einen Protokolldateneinheit (Protocol Data Unit bzw. PDU)-Sitzungsidentifizierer (ID) aufweist, der die PDN-Verbindung in einer an das EPC-Netz (102) gesendeten PDN-Konnektivitätsanfrage-Nachricht der PDN-Konnektivitätsprozedur identifiziert.

3. Ein Verfahren, das durch ein Kommunikationsgerät (100) für das Handhaben einer Paketdatennetz (PDN)-Verbindung und eines Netz-Slices durchgeführt wird, aufweisend:
Herstellen (302) einer PDN-Verbindung mit einem EPC (Evolved Packet Core)-Netz (102),
Senden (304; 402) einer Registrierungsanfrage-Nachricht einer Registrierungsprozedur an ein 5GC (Fifth-Generation Core)-Netz (104),
Empfangen (306; 408), von dem 5GC-Netz (104), einer Registrierungsannahme-Nachricht, die einen Slice-Identifizierer aufweist,
gleichzeitiges Verbinden mit den EPC- und 5GC-Netzen (102, 104), und
Empfangen von Paketen von dem EPC-Netz (102) auf einer ersten Trägerfrequenz und von dem 5GC-Netz (104) auf einer zweiten Trägerfrequenz, oder Senden von Paketen an das EPC-Netz (102) auf der ersten Trägerfrequenz und an das 5GC-Netz (104) auf der zweiten Trägerfrequenz.

4. Verfahren nach Anspruch 3, wobei das Verfahren weiterhin aufweist:
Durchführen einer PDN-Konnektivitätsprozedur mit dem EPC-Netz (102) für das Herstellen der PDN-Verbindung mit dem EPC-Netz (102),
wobei das Kommunikationsgerät (100) einen Protokolldateneinheit (Protocol Data Unit bzw. PDU)-Sitzungsidentifizierer (ID) aufweist, der die PDN-Verbindung in einer an das EPC-Netz (102) gesendeten PDN-Konnektivitätsanfrage-Nachricht der PDN-Konnektivitätsprozedur identifiziert.

5. Ein 5GC (Fifth-Generation Core)-Netz (104) für das Handhaben einer Paketdatennetz (PDN)-Verbindung und eines Netz-Slices, aufweisend:
wenigstens eine Speichereinrichtung (210), und
wenigstens eine Verarbeitungsschaltung (200), die mit der wenigstens einen Speichereinrichtung (210) gekoppelt ist, wobei die wenigstens eine Speichereinrichtung (210) Befehle speichert und die wenigstens eine Verarbeitungsschaltung (200) konfiguriert ist zum Ausführen von diesen zum:
Empfangen einer Registrierungsanfrage-Nachricht von einem Kommunikationsgerät (100),
Empfangen, von einem EPC (Evolved Packet Core)-Netz (102), eines Kontexts einer PDN-Verbindung des Kommunikationsgeräts (100) mit dem EPC-Netz (102),
Zuweisen eines Slice-Identifizierers für die PDN-Verbindung,
Senden, an das Kommunikationsgerät (100), einer Registrierungsannahme-Nachricht, die den Slice-Identifizierer aufweist,
Verbinden mit dem Kommunikationsgerät (100), und
Empfangen von Paketen von dem Kommunikationsgerät (100) auf einer zweiten Trägerfrequenz, oder Senden von Paketen an das Kommunikationsgerät (100) auf der zweiten Trägerfrequenz.

6. 5GC-Netz (104) nach Anspruch 5, wobei die Befehle weiterhin aufweisen:
Senden einer UE-Konfigurationsaktualisierungsbefehl-Nachricht, die den Slice-Identifizierer zu dem Kommunikationsgerät (100) zuweist, wenn das 5GC-Netz (104) den Slice-Identifizierer nicht in der Registrierungsannahme-Nachricht aufweist.

7. 5GC-Netz (104) nach Anspruch 5, wobei die Befehle weiterhin aufweisen:
Bestimmen des Aufrechterhaltens der PDN-Verbindung mit dem EPC-Netz (102) oder des Freigebens der PDN-Verbindung mit dem EPC-Netz (102), und
Benachrichtigen der Bestimmung in der Registrierungsannahme-Nachricht an das Kommunikationsgerät (100).

8. 5GC-Netz (104) nach Anspruch 5, wobei die Registrierungsannahme-Nachricht einen Protokolldateneinheit (Protocol Data Unit bzw. PDU)-Sitzungsidentifizierer (ID) für das Identifizieren der PDN-Verbindung mit dem EPC-Netz (102) aufweist, wenn das 5GC-Netz (104) das Aufrechterhalten der PDN-Verbindung mit dem EPC-Netz (102) für das Kommunikationsgerät (100) bestimmt.

9. Ein Verfahren, das durch ein 5GC (Fifth-Generation Core)-Netz (104)-Gerät für das Handhaben einer Paketdatennetz (PDN)-Verbindung und eines Netz-Slices durchgeführt wird, aufweisend:
Empfangen einer Registrierungsanfrage-Nachricht von einem Kommunikationsgerät (100),
Empfangen, von einem EPC (Evolved Packet Core)-Netz (102), eines Kontexts einer PDN-Verbindung des Kommunikationsgeräts (100) mit dem EPC-Netz (102),
Zuweisen eines Slice-Identifizierers für die PDN-Verbindung, Senden, an das Kommunikationsgerät (100), einer Registrierungsannahme-Nachricht, die den Slice-Identifizierer aufweist,
Verbinden mit dem Kommunikationsgerät (100), und
Empfangen von Paketen von dem Kommunikationsgerät (100) auf einer zweiten Trägerfrequenz, oder Senden von Paketen an das Kommunikationsgerät (100) auf der zweiten Trägerfrequenz.

10. Verfahren nach Anspruch 9, wobei das Verfahren weiterhin aufweist:
Senden einer UE-Konfigurationsaktualisierungsbefehl-Nachricht, die den Slice-Identifizierer zu dem Kommunikationsgerät (100) zuweist, wenn das 5GC-Netz (104) den Slice-Identifizierer nicht in der Registrierungsannahme-Nachricht aufweist.

11. Verfahren nach Anspruch 9, wobei das Verfahren weiterhin aufweist:
Bestimmen des Aufrechterhaltens der PDN-Verbindung mit dem EPC-Netz (102) oder des Freigebens der PDN-Verbindung mit dem EPC-Netz (102), und
Benachrichtigen der Bestimmung in der Registrierungsannahme-Nachricht an das Kommunikationsgerät (100).

12. Verfahren nach Anspruch 9, wobei die Registrierungsannahme-Nachricht einen Protokolldateneinheit (Protocol Data Unit bzw. PDU)-Sitzungsidentifizierer (ID) für das Identifizieren der PDN-Verbindung mit dem EPC-Netz (102) aufweist, wenn das 5GC-Netz (104) das Aufrechterhalten der PDN-Verbindung mit dem EPC-Netz (102) für das Kommunikationsgerät (100) bestimmt.

## Revendications

1. Dispositif de communication (100) destiné à gérer une connexion de réseau de données par paquets, PDN, et une tranche de réseau, comprenant :
au moins un dispositif de stockage (210) ; et
au moins un circuit de traitement (200), relié à l'au moins un dispositif de stockage (210), dans lequel l'au moins un dispositif de stockage (210) stocke, et l'au moins un circuit de traitement (200) est configuré pour exécuter, des instructions de :
établissement (302) d'une connexion de PDN avec un premier réseau à noyau de paquet évolué, EPC, (102) ;
émission (304 ; 402) d'un message de requête d'enregistrement d'une procédure d'enregistrement à un réseau à noyau de cinquième génération, 5GC, (104) ;
réception (306 ;408), en provenance du réseau à 5GC (104), d'un message d'acceptation d'enregistrement comprenant un identifiant de tranche ;
connexion simultanée aux réseaux à EPC et à 5GC (102, 104) ; et
réception de paquets en provenance du réseau à EPC (102) à une première fréquence porteuse et du réseau à 5GC (104) à une deuxième fréquence porteuse, ou d'émission de paquets au réseau à EPC (102) à la première fréquence porteuse et au réseau à 5GC (104) à la deuxième fréquence porteuse.

2. Dispositif de communication (100) selon la revendication 1, dans lequel l'au moins un circuit de traitement (200) est en outre configuré pour exécuter des instructions de :
exécution d'une procédure de connectivité de PDN avec le réseau à EPC (102) pour établir (302) la connexion de PDN avec le réseau à EPC (102) ;
dans lequel le dispositif de communication (100) comprend un identifiant de session de PDU, ID, pour identifier la connexion de PDN dans un message de requête de connectivité PDN CONNECTIVITY REQUEST de la procédure de connectivité de PDN émise au réseau à EPC (102).

3. Procédé exécuté par un dispositif de communication (100) destiné à gérer une connexion de réseau de données par paquets, PDN, et une tranche de réseau, comprenant :
l'établissement (302) d'une connexion de PDN avec un réseau à noyau de paquet évolué, EPC, (102) ;
l'émission (304 ; 402) d'un message de requête d'enregistrement d'une procédure d'enregistrement à un réseau à noyau de cinquième génération, 5GC, (104) ;
la réception (306 ; 408), en provenance du réseau à 5GC (104), d'un message d'acceptation d'enregistrement comprenant un identifiant de tranche ;
la connexion simultanée au premier réseau et au réseau à 5GC (102, 104) ; et
la réception de paquets en provenance du réseau à EPC (102) à une première fréquence porteuse et du réseau à 5GC (104) à une deuxième fréquence porteuse, ou l'émission de paquets au réseau à EPC (102) à la première fréquence porteuse et au réseau à 5GC (104) à la deuxième fréquence porteuse.

4. Procédé selon la revendication 3, dans lequel le procédé comprend en outre :
l'exécution d'une procédure de connectivité de PDN avec le réseau à EPC (102) pour établir la connexion de PDN avec le réseau à EPC (102) ;
dans lequel le dispositif de communication (100) comprend un identifiant de session de PDU, ID, pour identifier la connexion de PDN dans un message de requête de connectivité PDN CONNECTIVITY REQUEST de la procédure de connectivité de PDN émise au réseau à EPC (102).

5. Réseau à noyau de cinquième génération, 5GC, (104) destiné à gérer une connexion de réseau de données par paquets, PDN, et une tranche de réseau, comprenant :
au moins un dispositif de stockage (210) ; et
au moins un circuit de traitement (200), relié à l'au moins un dispositif de stockage (210), dans lequel l'au moins un dispositif de stockage (210) stocke, et l'au moins un circuit de traitement (200) est configuré pour exécuter, des instructions de :
réception d'un message de requête d'enregistrement en provenance d'un dispositif de communication (100) ;
réception, en provenance d'un réseau à noyau de paquet évolué, EPC, (102) d'un contexte d'une connexion de PDN du dispositif de communication (100) avec le réseau à EPC (102) ;
attribution d'un identifiant de tranche pour la connexion de PDN ;
émission, au dispositif de communication (100), d'un message d'acceptation d'enregistrement comprenant l'identifiant de tranche ;
connexion au dispositif de communication (100) ; et
réception de paquets en provenance du dispositif de communication (100) à une deuxième fréquence porteuse, ou d'émission de paquets au dispositif de communication (100) à la deuxième fréquence porteuse.

6. Réseau à 5GC (104) selon la revendication 5, dans lequel les instructions comprennent en outre :
l'émission d'un message de commande de mise à jour de configuration UE attribuant l'identifiant de tranche au dispositif de communication (100), lorsque le réseau à 5GC (104) ne comprend pas l'identifiant de tranche dans le message d'acceptation d'enregistrement.

7. Réseau à 5GC (104) selon la revendication 5, dans lequel les instructions comprennent en outre :
la détermination de maintenir la connexion de PDN avec le réseau à EPC (102) ou la libération de la connexion de PDN avec le réseau à EPC (102) ; et
la notification de la détermination dans le message d'acceptation d'enregistrement au dispositif de communication (100) .

8. Réseau à 5GC (104) selon la revendication 5, dans lequel le message d'acceptation d'enregistrement comprend un identifiant de session de PDU, ID, pour identifier la connexion de PDN (102), si le réseau à 5GC (104) détermine de maintenir la connexion de PDN avec le réseau à EPC (102) pour le dispositif de communication (100).

9. Procédé exécuté par un réseau à noyau de cinquième génération, 5GC, (104) destiné à gérer une connexion de réseau de données par paquets, PDN, et une tranche de réseau, comprenant :
la réception d'un message de requête d'enregistrement en provenance d'un dispositif de communication (100) ;
la réception, en provenance d'un réseau à noyau de paquet évolué, EPC, (102) d'un contexte d'une connexion de PDN du dispositif de communication (100) avec le réseau à EPC (102) ;
l'attribution d'un identifiant de tranche pour la connexion de PDN ;
l'émission, au dispositif de communication (100), d'un message d'acceptation d'enregistrement comprenant l'identifiant de tranche ;
la connexion au dispositif de communication (100) ; et
la réception de paquets en provenance du dispositif de communication (100) à une deuxième fréquence porteuse, ou l'émission de paquets au dispositif de communication (100) à la deuxième fréquence porteuse.

10. Procédé selon la revendication 9, dans lequel le procédé comprend en outre :
l'émission d'un message de commande de mise à jour de configuration d'UE attribuant l'identifiant de tranche au dispositif de communication (100), lorsque le réseau à 5GC (104) ne comprend pas l'identifiant de tranche dans le message d'acceptation d'enregistrement.

11. Procédé selon la revendication 9, dans lequel le procédé comprend en outre :
la détermination de maintenir la connexion de PDN avec le réseau à EPC (102) ou la libération de la connexion de PDN avec le réseau à EPC (102) ; et
la notification de la détermination dans le message d'acceptation d'enregistrement au dispositif de communication (100).

12. Procédé selon la revendication 9, dans lequel le message d'acceptation d'enregistrement comprend un identifiant de session de PDU, ID, pour identifier la connexion de PDN (102), si le réseau à 5GC (104) détermine de maintenir la connexion de PDN avec le réseau à EPC (102) pour le dispositif de communication (100) .
